# EUROPÄISCHE PATENTANMELDUNG

(11) **EP 3 863 165 A1**
(43) Veröffentlichungstag der Anmeldung: **11.08.2021**
(21) Anmeldenummer: 20020061.6
(22) Anmeldetag: 10.02.2020
(51) Int. Cl.: H02K 44/08

(54) **MAGNETOHYDRODYNAMISCHER GENERATOR**

(71) Anmelder: SGF Innovative Energie Systeme UG, 13187 Berlin (DE)
(72) Erfinder: Gandrabura, Mihail, 13187 Berlin (DE)

(57) **Zusammenfassung**

Ein magnetohydrodynamischer Generator (30) umfasst eine Strahlbildungskammer (50), aufweisend eine Elektrodenanordnung (55, 56), wobei die Elektrodenanordnung (55, 56) eine Anode (56), welche einen Anodeninnenraum (56a) aufweist, sowie eine Kathode (55) umfasst, welche im Anodeninnenraum (56a) beweglich angeordnet ist, wobei die Anode (56) ausgestaltet ist, um Wasser in den Anodeninnenraum (56a) zu leiten, und die Kathode (55) ausgestaltet ist, um Wasserstoff in den Anodeninnenraum (56a) zu leiten. Der magnetohydrodynamische Generator (1) umfasst ferner eine Generatorkammer (36), welche elektrische Ladungsplatten (32, 33) sowie Magnetpole (34, 35) aufweist, wobei die elektrischen Ladungsplatten (32, 33) entlang einer ersten Richtung (R1) einander gegenüberstehen, die Magnetpole (34, 35) entlang einer zweiten Richtung (R2) einander gegenüberstehen, und die erste Richtung (R1) und die zweite Richtung (R2) im Wesentlichen rechtwinklig zueinander angeordnet sind. Die Strahlbildungskammer (50) und die Generatorkammer (36) sind mittels einer Durchtrittsöffnung (56d) miteinander fluidmäßig verbunden.

## Beschreibung

### Gebiet der Erfindung

Die vorliegende Erfindung betrifft einen magnetohydrodynamischen Generator zur Bereitstellung elektrischer Energie sowie von Wärme.

### Hintergrund der Erfindung

Ein Liter Wasser (H20) enthält ungefähr 55,5 mol an Wassermolekülen. Eine Menge von 55,5 mol gasförmigen Wasserstoffs nimmt bei Laborbedingungen (d.h. einer Temperatur von 293,15 K sowie einem Druck von 1013,25 hPa) ein Volumen von ca. 1334 Litern ein. Wasserstoff hat eine spezifischen Verbrennungswärme Q = 10,78 kJ/l (1,21 · 10⁸ J / kg). Zum Vergleich beträgt die spezifische Verbrennungswärme von Torf etwa 8,1 · 10⁶ J / kg, von Haushaltsgas etwa 13,25 · 10⁶ J/kg, von Benzin etwa 44 · 10⁶ J / kg, und von Kernbrennstoff etwa 824 · 10¹¹ J/kg.

Je größer die spezifische Verbrennungswärme des Brennstoffs ist, desto geringer kann der spezifische Brennstoffverbrauch ausfallen, und desto kleiner können die Abmessungen eines Brennraums sein, um die gleiche Energieausbeute zu erzielen

Grundsätzlich sind elektrische Energiequellen bekannt, die auf der Aufspaltung mittels Katalyse von Wasser (H2O) und der Gewinnung seines brennbaren Bestandteils (H2) beruhen. Die Umwandlung der chemischen Energie in einer chemischen Reaktion (Verbrennung) erzeugt Wärmeenergie. Diese wird dann elektrodynamisch oder elektromechanisch umgewandelt in elektrische Energie. Was dem hier beschriebenen Verfahren technisch am nächsten kommt, ist ein durch Verbrennung von Wasserstoff angetriebener Generator zur Erzeugung elektrischer Energie. Dazu wird Wasser katalytisch elektrolysiert bzw. aufgespalten. Die Wasserstoffbrennkammer erzeugt ein Plasma. In einem thermischen Generator wird das Plasma in elektrische Energie umgewandelt. Der thermische Generator ist über einen Turbogenerator mit der Wasserstoffbrennkammer verbunden. Die Nachteile dieses bekannten thermischen Generators zur Erzeugung elektrischer Energie sind ein hohes Gewicht und große Geräteabmessungen. Der Wirkungsgrad ist gering und eine wirtschaftliche Nutzung erheblich eingeschränkt.

### Überblick über die Erfindung

Die vorliegende Erfindung betrifft einen magnetohydrodynamischen Generator zur Bereitstellung von elektrischer Energie sowie von Wärme. Der magnetohydrodynamische Generator erzeugt einen Gasgemischstrahl, welcher elektrische Ladungen umfasst, welche zur Gewinnung von elektrischem Strom und/oder Wärme im magnetohydrodynamischen Generator getrennt werden. Wasserstoff wird im magnetohydrodynamischen Generator verbrannt, wobei die Wasserstoffverbrennung die Bildung und/oder Aufrechterhaltung des elektrisch geladene Teilchen sowie elektrisch neutrale Teilchen umfassenden Gasgemischstrahls ermöglicht bzw. unterstützt. Der Gasgemischstrahl wird in elektrische Energie und Abwärme umgewandelt durch Trennung der im Gasgemischstrahl vorhandenen elektrisch geladenen Teilchen in elektrisch positiv geladene und elektrisch negativ geladene Teilchen. Die elektrische Energie kann einem Stromverbraucher zugeführt werden. Die Abwärme kann zum Heizen verwendet werden.

Der Gasgemischstrahl umfasst zumindest teilweise elektrische geladene Teilchen, d.h. Elektronen, elektrisch positiv geladene Teilchen, und/oder elektrisch negativ geladene Teilchen. Der Gasgemischstrahl kann einen Plasmastrahl umfassen. Die Trennung der elektrisch geladenen Teilchen des Gasgemischstrahls erfolgt mittels eines Magnetfelds. Die elektrisch geladenen Teilchen des Gasgemischstrahls weisen eine Geschwindigkeit in Richtung des Gasgemischstrahls bzw. eine Geschwindigkeitsverteilung auf. Das Magnetfeld wirkt auf die elektrisch geladenen Teilchen des Gasgemischstrahls, welche sich bewegen, und lenkt die elektrisch geladenen Teilchen des Gasgemischstrahls gemäß des Vorzeichens der elektrischen Ladung (positiv oder negativ) sowie gemäß der Geschwindigkeit aufgrund der Lorentzkraft in verschiedene Richtungen ab. Die Lorentzkraft beschleunigt die elektrisch geladenen Teilchen des Gasgemischstrahls in entgegengesetzte Richtungen gemäß des Vorzeichens der elektrischen Ladung der elektrisch geladenen Teilchen.

Die vorliegende Erfindung stellt ferner eine Anlage zur Bereitstellung von Energie und Wärme bereit. Die Anlage umfasst eine Energieversorgungseinheit zur Gewinnung von elektrischem Strom aus natürlichen Quellen, wie z.B. Wind, Sonne, Wasserkraft, Gezeitenkraft, Geothermie oder Bioenergie. Die Anlage umfasst weiter ein Elektrolysegerät bzw. einen Elektrolyseur, einen Wasserstofftank bzw. Gasspeicher sowie einen Kompressor, einen magnetohydrodynamischen Generator. Der magnetohydrodynamische Generator umfasst eine Strahlbildungskammer sowie eine Generatorkammer. Die Anlage kann ferner eine Datenerfassungseinheit sowie eine Steuereinheit umfassen.

Der Elektrolyseur spaltet Wasser (H2O) in seine Bestandteile Sauerstoff (O2) und Wasserstoff (H2) auf. Der durch Aufspaltung von Wasser entstehende Wasserstoff wird aufgefangen.

Der gewonnene Wasserstoff wird mittels des Kompressors verdichtet und im Wasserstofftank gespeichert. Der Wasserstofftank bildet einen Energiezwischenspeicher, welcher ausgebildet ist um elektrische Energie in Form von Wasserstoff zwischenzuspeichern.

Der Wasserstoff wird vom Wasserstofftank in die Strahlbildungskammer geleitet. Der Fluss von Wasserstoff vom Wasserstofftank in die Strahlbildungskammer kann gesteuert werden, beispielsweise mittels eines oder mehrerer Ventile. Der Wasserstoff kann vom Wasserstofftank durch einen Wasserstoffschlauch in die Strahlbildungskammer geleitet werden. Der Wasserstoffschlauch kann feuerfest sein. Der Wasserstoffschlauch kann ein Hochdruckschlauch sein.

In der Strahlbildungskammer wird aus in die Strahlbildungskammer geleitetem Wasser und dem in die Strahlbildungskammer geleiteten Wasserstoff mittels thermischer Energie zumindest teilweise ein Plasma erzeugt. Die thermische Energie erhitzt und ionisiert teilweise das Wasser und den Wasserstoff. Ferner spaltet die thermische Energie zumindest teilweise Wassermoleküle sowie Wasserstoffmoleküle. Es entsteht ein Gasgemisch aus Elektronen, Ionen, Atomen und Molekülen von hoher Temperatur. Das Gasgemisch kann beispielsweise Wassermoleküle (H₂O), neutrale und/oder ionisierte Wasserstoffmoleküle (u.a. H_{2,}, H₂⁺, H₂⁻), neutrale und/oder ionisierte Sauerstoffmoleküle (u.a. O₂, O₂⁺,O₂⁻), neutrale und/oder ionisierte Hydroxyl-Radikale (u.a. OH, OH⁺, OH⁻), neutrale und/oder ionisierte Wasserstoffatome (u.a. H, H⁺, H⁻), neutrale und/oder ionisierte Sauerstoffatome (u.a. O, O⁺, O⁻), neutrale und/oder ionisierte Wasserstoffatome (u.a. H, H⁺, H⁻) und Elektronen umfassen. Ein Überdruck entsteht in der Strahlbildungskammer aufgrund der hohen Temperatur des Gasgemisches. Das Gasgemisch wird aufgrund des Überdrucks in Form des Gasgemischstrahls in die Generatorkammer geleitet und dort in einerseits Elektronen sowie elektrisch negativ geladene Ionen und andererseits elektrisch positiv geladene Ionen getrennt. Die Strahlbildungskammer liefert somit in Form des Gasgemischstrahls die Energie zur Erzeugung elektrischer Energie in der Generatorkammer.

Die Strahlbildungskammer umfasst eine Elektrodenanordnung, welche eine Kathode und eine Anode umfasst. Die Kathode ist elektrisch mit dem Minuspol eines Wechselrichters verbunden. Die Anode ist elektrisch mit dem Pluspol des Wechselrichters verbunden.

Die Kathode ist aus einem leitenden Material hergestellt. Beispielsweise ist die Kathode zumindest teilweise aus Wolfram (W) hergestellt. Das Gasgemisch im Anodeninnenraum hat eine geringe Wärmeleitfähigkeit. Aufgrund der geringen Wärmeleitfähigkeit des Gasgemischs erwärmt sich die zumindest teilweise aus Wolfram hergestellte Kathode nur mäßig und kann Temperaturen des Gasgemischs in einem Bereich von ungefähr 6000°C bis ungefähr 10000°C standhalten.

Die Kathode ist ausgestaltet, um Wasserstoff in den Anodeninnenraum zu leiten.

Die Kathode ist gemäß einem Aspekt eine Stabkathode und weist eine längliche, eine Stabkathodenlängsachse aufweisende Stabform auf. Die Stabkathode kann hohl sein. Die Stabkathode kann einen Hohlraum umfassen, welcher sich entlang der Stabkathodenlängsachse erstreckt und an den Enden entlang einer Stabkathodenlängsrichtung der Stabkathodenlängsachse jeweils offen ist. Die hohle Stabkathode ist zumindest entlang der Stabkathodenlängsachse beweglich angeordnet. Zumindest ein strahlbildungskammerseitiges Ende der offenen Enden der hohlen Stabkathode entlang der Stabkathodenlängsachse ist im Anodeninnenraum angeordnet.

Der Wasserstoffschlauch ist an einem wasserstofftankseitigen Ende der offenen Enden der hohlen Stabkathode mit der hohlen Stabkathode fluidmäßig verbunden. Wasserstoff kann vom Wasserstofftank durch den Wasserstoffschlauch sowie die hohle Stabkathode strömen. Die hohle Stabkathode führt Wasserstoff durch den Hohlraum der Stabkathode in die Strahlbildungskammer. Wasserstoff kann durch das strahlbildungskammerseitige Ende der hohlen Stabkathode in die Strahlbildungskammer geleitet werden. Das Leiten von Wasserstoff durch die hohle Stabkathode ermöglicht eine niedrigere Zündungsspannung zum Zünden eines Lichtbogens zwischen der hohlen Stabkathode und der Anode.

Das strahlbildungskammerseitige Ende der hohlen Stabkathode kann feuerfest sein. Das strahlbildungskammerseitige Ende der hohlen Stabkathode kann eine Stabkathodenspitze umfassen. Das strahlbildungskammerseitige Ende der hohlen Stabkathode kann aus Wolfram hergestellt sein.

Die Anode besteht aus einem leitenden Material. Beispielsweise besteht die Anode zumindest teilweise aus Molybdän (Mo).Die Anode kann einen rohrförmigen oder topfförmigen Abschnitt aufweisen. Der rohr- oder topfförmige Abschnitt kann beispielweise einen kreisförmigen Querschnitt aufweisen. Der rohr- oder topfförmige Abschnitt bildet einen Anodeninnenraum aus.

Die hohle Stabkathode kann zumindest teilweise in einem Anodeninnenraum des rohrförmigen Abschnitts der Anode aufgenommen sein. Bei einer Anordnung der Stabkathode im Anodeninnenraum des rohrförmigen Abschnitts der Anode wird im Anodeninnenraum ein Anodeninnenraum zwischen der Anode und der hohlen Stabkathode ausgebildet.

Die hohle Stabkathode ist beweglich in der Stabkathodenlängsrichtung bezüglich der Anode im Anodeninnenraum angeordnet. Die Stabkathodenlängsachse kann im Wesentlichen koaxial zu einer Anodenlängsachse der Anode im Anodeninnenraum angeordnet sein. Die hohle Stabkathode kann einen außerhalb des Anodeninnenraums angeordneten Abschnitt aufweisen.

Der Anodeninnenraum ist wasserstofftankseitig durch eine Seitenwand abgeschlossen. Die Seitenwand umfasst eine Öffnung, durch welche die hohle Stabkathode hindurchführt. Die Seitenwand kann entweder einstückig mit der Anode bereitgestellt sein oder mit der Anode fest verbindbar sein.

Zwischen der hohlen Stabkathode und der Anode wird mittels einer elektrischen Spannung ein Lichtbogen ausgebildet. Mittels von durch den Lichtbogen hervorgerufener Ionisation und Erwärmung wird die Bildung des Gasgemisches im Anodeninnenraum ermöglicht. Ferner die Erhitzung zur Ausbildung eines Überdrucks im Anodeninnenraum. Das gebildete Gasgemisch kann in die Generatorkammer geleitet werden. Der erzeugte Überdruck wird zur Bildung des Gasgemischstrahls genutzt, welcher in die Generatorkammer geleitet wird.

Der Lichtbogen bildet sich dort aus, wo der Abstand zwischen der hohlen Stabkathode und der Anode am geringsten ist. Zur Zündung des Lichtbogens wird das strahlbildungskammerseitige Ende der hohlen Stabkathode entlang der Stabkathodenlängsrichtung im Anodeninnenraum der Anode in eine Zündungsposition bewegt. In der Zündungsposition liegt ein möglichst kleiner Abstand zwischen dem strahlbildungskammerseitigen Ende der hohlen Stabkathode und der Anode vor. Eine elektrische Zündungsspannung zwischen dem strahlbildungskammerseitigen Ende der hohlen Stabkathoden und der Anode in der Zündungsposition ermöglicht die Ausbildung eines Lichtbogens in der Zündungsposition zwischen der hohlen Stabkathode und der Anode. Der Abstand zwischen dem strahlbildungskammerseitigen Ende der hohlen Stabkathode und der Anode kann in der Zündungsposition ungefähr 1mm oder weniger als 1mm betragen.

Nach Zündung des Lichtbogens kann die hohle Stabkathode entlang der Stabkathodenlängsrichtung im Anodeninnenraum der Anode in eine Betriebsposition bewegt werden. In der Betriebsposition kann der Abstand zwischen dem strahlbildungskammerseitigen Ende der hohlen Stabkathode und der Anode größer sein als in der Zündungsposition. Der Abstand zwischen dem strahlbildungskammerseitigen Ende der hohlen Stabkathode und der Anode kann in der Betriebsposition ungefähr 1cm oder mehr als 1cm betragen. In der Betriebsposition kann eine elektrische Betriebsspannung zur Aufrechterhaltung des Lichtbogens in der Betriebsposition niedriger sein als die elektrische Zündungsspannung.

Die Strahlbildungskammer kann weiter einen Wasserspeicherabschnitt zum Speichern von Wasser umfassen. Der Wasserspeicherabschnitt kann angrenzend an den Anodeninnenraum angeordnet sein. Der Wasserspeicherabschnitt kann direkt an den rohr- oder topfförmigen Abschnitt der Anode und/oder den rohr- oder topfförmigen Abschnitt der Anode umgebend angeordnet sein. Der Wasserspeicherabschnitt ist ausgebildet, um Wasser zu speichern. Der Wasserspeicherabschnitt ist ferner ausgebildet, um Wasser in den Anodeninnenraum abzugeben. Der Wasserspeicherabschnitt kann eine oder mehrere Wassereintrittsöffnungen umfassen zum Leiten von Wasser in den Anodeninnenraum. Durch die Wassereintrittsöffnungen kann im Wasserspeicherabschnitt befindliches Wasser in den Anodeninnenraum gelangen. Die eine oder mehrere Wassereintrittsöffnungen sind ausgestaltet, um im Wasserspeicherabschnitt befindliches Wasser in den Anodeninnenraum zu leiten. Der Wasserspeicherabschnitt ist ausgebildet, um Wasser aufzunehmen (d.h. zu speichern) und abzugeben. Insbesondere gibt der Wasserspeicherabschnitt bei Wärme Wasser ab, indem das Wasser aus dem Wasserspeicherabschnitt verdunstet. Wärme im Anodeninnenraum führt dazu, dass im Wasserspeicherabschnitt befindliches Wasser verdunstet und über die eine oder mehreren Wassereintrittsöffnungen in den Anodeninnenraum gelangt.

Der Wasserspeicherabschnitt kann ferner einen wasserspeichernden und/oder hitzebeständigen Stoff bzw. ein Wasserspeichermaterial beherbergen. Das Wasserspeichermaterial kann geeignet sein, Wasser aufzunehmen und abzugeben. Der wasserspeichernde und/oder hitzebeständige Stoff bzw. das Wasserspeichermaterial kann bei Temperaturerhöhung schrumpfen. Der wasserspeichernde und/oder hitzebeständige Stoff bzw. das Wasserspeichermaterial kann sich bei Kontakt mit Wasser ausdehnen. Der wasserspeichernde und/oder hitzebeständige Stoff bzw. das Wasserspeichermaterial kann ein Aramid umfassen. Ein Beispiel eines Aramids ist Nomex des Herstellers DuPont.

Der Wasserspeicherabschnitt kann mit einer oder mehreren Wasserleitungen verbunden sein, durch welche Wasser in den Wasserspeicherabschnitt gelangen kann.

Das in den Anodeninnenraum gelangende Wasser wird durch die hohe Temperatur im Anodeninnenraum erhitzt. Der Lichtbogen erhitzt das Wasser weiter auf eine Ionisationstemperatur und/oder spaltet Moleküle des Wassers in Elektronen, Ionen, Atome, und Moleküle. Es entsteht ein Gasgemisch, welches Radikale umfasst Ein sich im Anodeninnenraum infolge hoher Temperatur ausbildender Überdruck kann einen durch eine Durchtrittsöffnung (s. unten) des Anodeninnenraums austretenden Gasgemischstrahl erzeugen. Das durch die Wassereintrittsöffnungen des Wasserspeicherabschnitts in den Anodeninnenraum gelangende bzw. eintretende Wasser kann die hohle Stabkathode und die Anode abkühlen.

Der Anodeninnenraum umfasst einen Durchtrittsabschnitt. Der Durchtrittsabschnitt ist angrenzend an den rohr- oder topfförmigen Abschnitt der Anode angeordnet. In der Zündungsposition befindet sich das strahlbildungskammerseitige Ende der hohlen Stabkathode in der Nähe des Durchtrittsabschnitts. Der Durchtrittsabschnitt umfasst eine Durchtrittsöffnung bzw. Strahlöffnung. Die Durchtrittsöffnung kann koaxial oder parallel zur Stabkathodenlängsachse und/oder zur Anodenlängsachse angeordnet sein. Das erzeugte Gasgemisch kann durch die Durchtrittsöffnung aus dem Anodeninnenraum herausströmen und einen Gasgemischstrahl erzeugen. Die Durchtrittsöffnung der Anode kann in einen Austrittsraum der Anode münden. Das Gasgemisch strömt in diesem Fall in den Austrittsraum der Anode.

Der Durchtrittsabschnitt kann einen sich in einer Anodenlängsrichtung entlang der Anodenlängsachse verjüngenden Abschnitt bzw. Düsenabschnitt umfassen, welcher eine Düse ausformt. Die Durchtrittsöffnung kann sich an einem Ort des Durchtrittsabschnitts und/oder des Düsenabschnitts mit einem im Wesentlichen geringsten Durchmesser befinden.

Bei Anlegen einer elektrischen Spannung zwischen der hohlen Stabkathode und der Anode kann ein Lichtbogen zwischen der hohlen Stabkathode und der Anode entstehen. Bei ausreichend hoher elektrischer Potentialdifferenz bzw. elektrischer Spannung zwischen der hohlen Stabkathode und der Anode wird ein elektrischer Strom durch Stoßionisation hervorgerufen, wobei das im Anodeninnenraum zwischen der hohlen Stabkathode und dem rohr- oder topfförmigen Abschnitt der Anode befindliche Gas, umfassend z.B. Luft, Wasserstoff und/oder Wasser, ionisiert wird. Die Ionisierung bildet ein Gasgemisch, in dem die Gasmoleküle zumindest teilweise ionisiert sind. Die durch Ionisierung entstehenden freien elektrischen Ladungsträger haben zur Folge, dass das Gasgemisch elektrisch leitfähig wird. Die Ionen sind gegenüber den viel leichteren Elektronen wesentlich langsamer, und die Elektronen können den Großteil des elektrischen Stroms beitragen. Der elektrische Strom Lichtemissionen hervorrufen sowie zu einer hohen Temperatur des Gasgemisches führen.

Ein generatorseitiges Ende der Anode verbindet fluidmäßig die Strahlbildungskammer mit der Generatorkammer. Die Anode kann an einem generatorseitigen Ende der Anode einen sich aufweitenden Austrittsabschnitt aufweisen. Der sich aufweitende Austrittsabschnitt kann sich beispielsweise diffusorförmig aufweiten. Der sich aufweitende Austrittsabschnitt am generatorseitigen Ende der Anode kann am Durchtrittsabschnitt der Anode als ein umlaufender, hervorstehender Rand ausgebildet sein, welcher sich ausgehend vom Durchtrittsabschnitt in Richtung zur Generatorkammer aufweitet. Das Profil des umlaufenden, hervorstehenden Randes des Austrittsabschnitts kann im Längsschnitt parallel zur Stabkathodenlängsachse sowie der Anodenlängsachse ein geradliniges oder ein gekrümmtes Profil aufweisen. Der umlaufende, hervorstehende Rand des Austrittsabschnitts schließt zusammen mit dem Durchtrittsabschnitt an einer Innenseite des umlaufenden, hervorstehenden Rands sowie an einem generatorseitigen Ende Durchtrittsöffnung der Anode den Austrittsraum der Anode ein. Der Austrittsraum kann sich aufweiten gemäß dem sich aufweitenden Austrittsabschnitt. Der Austrittsraum kann beispielsweise eine kegelstumpfartige bzw. kegelstumpfähnliche oder eine trichterartige bzw. trichterähnliche Gestalt aufweisen. Der sich aufweitende Austrittsraum erzeugt in der Umgebung der Durchtrittsöffnung des Durchtrittsabschnitts der Anode einen Unterdruck. Der Unterdruck unterstützt die Erzeugung des Gasgemischstrahls.

Die Anode und/oder die Generatorkammer kann/können mindestens einen Lufteinlasskanal umfassen, welche von einer äußeren Umgebung der Anode in den Austrittsraum der Anode führen. Der mindestens eine Lufteinlasskanal kann an einer Außenseite des umlaufenden, hervorstehenden Rands des Austrittsabschnitts ausgebildet sein und durch den Rand in den Austrittsraum der Anode führen. Der mindestens eine Lufteinlasskanal kann teilweise durch den Durchtrittsabschnitt der Anode führen und in den Austrittsraum münden. Der mindestens eine Lufteinlasskanal kann beispielsweise in die Nähe der Durchtrittsöffnung in den Austrittsraum der Anode führen. Luft kann durch den mindestens einen Lufteinlasskanal in den Austrittsraum strömen. Der mindestens eine Lufteinlasskanal kann geradlinig oder gekrümmt verlaufen.

Die durch den mindestens einen Lufteinlasskanal einströmende Luft kann durch die Durchtrittsöffnung in die Generatorkammer gelangen und für die Verbrennung des Wasserstoffs in der Generatorkammer zur Verfügung stehen. Beispielsweise kann Luft durch Unterdruck in der Generatorkammer bzw. im Austrittsraum durch den mindestens einen Lufteinlasskanal in den Austrittsraum strömen.

Die Strahlbildungskammer, die Anode, die hohle Stabkathode und der Wasserstoffschlauch können von einer Hülle umgeben sein, die zumindest teilweise aus einem dielektrischen Material bestehen kann und eine oder mehrere Öffnungen umfasst, durch welche Luft in das Innere der Hülle eintreten kann. Beispielsweise ist die Hülle perforiert, und tritt Luft durch die Perforierung in die Hülle ein. Die mit dem Wasserspeicherabschnitt verbundenen Wasserleitungen können durch die Hülle durchtreten, um mit einer Wasserquelle bzw. einem Wasserspeicher verbunden zu sein. Die Hülle kann rohrförmig sein. Der Wasserstoffschlauch kann zumindest teilweise innerhalb der Hülle angeordnet sein.

Das generatorseitige Ende der Anode ist fluidmäßig mit der Generatorkammer verbunden. Insbesondere ist der Austrittsabschnitt der Anode mit der Generatorkammer fluidmäßig verbunden. Der Austrittsraum der Anode geht unmittelbar über in die Generatorkammer.

Die Generatorkammer umfasst ein Generatorgehäuse. Das Generatorgehäuse ist aus einem dielektrischen Material, beispielsweise aus Plexiglas, hergestellt. Beispielsweise kann das Generatorgehäuse aus einem dielektrischen Rohr bestehen. Das dielektrische Rohr kann einen abgerundeten Querschnitt aufweisen. Insbesondere kann das dielektrische Rohr einen kreisförmigen Querschnitt aufweisen. Das dielektrische Rohr kann jedoch auch eine nicht abgerundete Querschnittsform aufweisen.

An einer Innenseite der Generatorkammer sind Ladungsplatten bzw. elektrische Ladungsplatten angeordnet, welche entlang einer ersten Richtung einander gegenüberstehen. Die einander gegenüberstehenden Ladungsplatten sind jeweils mit elektrischen Leitungen elektrisch verbunden, welche beispielsweise zu einem Stromverbraucher oder einer Batterie zum Speichern der elektrischen Energie führen. Die Ladungsplatten sind aus einem nicht-magnetischen Material, wie z.B. Kupfer, Aluminium, Edelstahl, oder einer Legierung aus Zinn und Nickel, hergestellt. Die Legierung kann zu 60% Zinn und zu 40% Nickel umfassen, was in einer korrosionsbeständigen und duktilen Legierung resultiert (z.B. härter als Nickel, jedoch verformbar). Alternativ können die Ladungsplatten auch verzinnt sein.

An einer Außenseite der Generatorkammer sind Magnete entgegengesetzter Polarisierung (Nord- und Südpol) angeordnet, welche entlang einer zweiten Richtung einander gegenüberstehen. Die einander gegenüberstehenden Magnete können Elektromagnete sein. Die erste Richtung und die zweite Richtung können im Wesentlichen senkrecht bzw. rechtwinklig zueinander angeordnet sein.

Der in die Generatorkammer eintretende Gasgemischstrahl, welcher Elektronen, Ionen, Atome und Moleküle umfasst, unterliegt beim Durchtreten des zwischen den Magnetpolen ausgebildeten Magnetfelds der Lorentzkraft, aufgrund welcher die Elektronen und die elektrisch geladenen Ionen gemäß dem Vorzeichen der elektrischen Ladung in entgegengesetzte Richtungen abgelenkt werden, wobei die Lorentzkraft parallel oder antiparallel zur ersten Richtung ist, entlang welcher die Ladungsplatten einander gegenüberstehen. Die Elektronen sowie die positiv und negativ elektrisch geladenen Ionen des Gasgemischs werden gemäß dem Vorzeichen der elektrischen Ladung, d.h. je nach positiver oder negativer elektrischer Ladung, in Richtung jeweils einer der Ladungsplatten abgelenkt und dort eingefangen. Die Ladungstrennung erzeugt eine elektrische Spannung, welche für einen Stromverbraucher nutzbar ist und/oder zum elektrischen Aufladen einer Batterie verwendet werden kann.

Die thermische sowie die kinetische Energie des Gasgemischstrahls, d.h. die Geschwindigkeit der Teilchen des Gasgemischs sowie die Ionisierung des Gasgemischs, werden in der Generatorkammer in elektrische Energie umgewandelt. Die Abwärme des Gasgemischstrahls ist zum Heizen nutzbar. Das Generatorgehäuse kann durch eine außen aufgetragene, keramikhaltige Schicht vor Hitze geschützt werden. Die keramikhaltige Schicht kann beispielweise ein unter der Bezeichnung Viniplast erhältliches Produkt umfassen.

Die Energieversorgungseinheit, der Elektrolyseur, der Wasserstofftank, die Strahlbildungskammer und der magnetohydrodynamische Generator der Anlage zur Bereitstellung elektrischer Energie und von Wärme umfassen jeweils Sensoren, welche den physikalischen und/oder chemischen Zustand betreffende Parameter erfassen. Die erfassten Parameter ermöglichen eine Überwachung der Anlage. Die erfassten Parameter werden in der Form von Sensordaten an die Steuereinheit gesendet. Beispielsweise werden die Sensordaten drahtlos an die Steuereinheit gesendet. Alternativ können die Sensordaten mittels einer Datenleitung an die Steuereinheit gesendet werden.

Die Steuereinheit der Anlage kann einen Prozessor umfassen. Der Prozessor kann die Sensordaten verarbeiten. Die Steuereinheit steuert die Anlage zur Bereitstellung von elektrischer Energie sowie von Wärme auf Basis der verarbeiteten Sensordaten.

Das Aufbrechen der molekularen Bindung eines Wassermoleküls (H2O) in seine Bestandteile (O2) und (H2) erfordert erhebliche Energiekosten. Durch den hier beschriebenen magnetohydrodynamischen Generator sowie die hier beschriebene Anlage kann die elektrische Eingangsenergie aus regenerativen Energiequellen, wie z.B. Solarenergie, Wasserkraft, Windenergie, Bioenergie oder Geothermie gewonnen werden.

In diesem Verfahren wird Wasserstoff (H2) aus der Elektrolyse von Wasser (H2O) gewonnen. Dessen Heizwert übersteigt den Brennwert von Kohlenwasserstoffverbindungen erheblich.

Durch den Einsatz der Anlage zur Bereitstellung von elektrischer Energie sowie von Wärme können beispielsweise landwirtschaftliche- und industrielle Anlagen oder private Haushalte in abgelegenen Gebieten vor Ort mit elektrischem Strom und/oder Wärme versorgt werden.

Beim Einsatz der erfindungsgemäßen Anlage entfällt die Lagerung von Brennstoffen, wie Kohle oder Öl, als Brennstoffreserve für die Energieerzeugung und/oder Wärmeerzeugung.

Das Volumen der Anlage zur Bereitstellung elektrischer Energie sowie von Wärme kann bezogen auf die erzielte Ausgangsleistung erheblich reduziert werden. Der hier erzielte Wirkungsgrad, liegt deutlich über dem Wirkungsgrad bereits bekannter ähnlicher Techniken. Dieses wird dadurch erreicht, dass die Generatorkammer unmittelbar anschließend an die Strahlbildungskammer angeordnet ist und mit der Strahlbildungskammer fluidmäßig verbunden ist.

Die Erfindung betrifft ferner ein Verfahren zum Bereitstellen elektrischer Leistung. Das Verfahren umfasst ein Zünden eines Lichtbogens in einer Strahlbildungskammer; ein Erzeugen mittels des Lichtbogens eines zumindest teilweise ionisierten Gasgemischs ausgehend von zumindest Wasser und Wasserstoff; ein Erzeugen eines Gasgemischstrahls aus dem Gasgemisch; ein Trennen von im Gasgemischstrahl vorhandenen elektrisch positiv geladenen Ionen und elektrisch negativ geladenen Ionen; Einfangen der elektrisch positiv geladenen Ionen und der elektrisch negativ geladenen Ionen an zwei einander gegenüberstehenden elektrischen Ladungsplatten.

Das Erzeugen des zumindest teilweise ionisierten Gasgemischs kann ein Zuführen von Wasserstoff sowie ein Zuführen von Wasser sowie ein Mischen zumindest des Wasserstoffs und des Wassers umfassen.

Das Zünden eines Lichtbogens kann ein Zünden eines Lichtbogens in einer Zündungsposition sowie ein Aufrechterhalten des Lichtbogens in einer Betriebsposition umfassen.

Das Verfahren kann ferner ein Zuführen eines Umgebungsluft umfassenden Luftstroms an Randbereiche des Gasgemischstrahls umfassen.

### Kurze Beschreibung der Zeichnungen

Fig. 1 ist eine schematische Darstellung einer Anlage zur Bereitstellung elektrischer Energie sowie von Wärme, in welcher der erfindungsgemäße magnetohydrodynamische Generator zum Einsatz kommen kann.
Fig. 2 zeigt einen Querschnitt einer Generatorkammer des erfindungsgemäßen magnetohydrodynamischen Generators.
Fig. 3 zeigt eine Strahlbildungskammer des erfindungsgemäßen magnetohydrodynamischen Generators, wobei die hohle Stabkathode sich in einer Zündungsposition befindet.
Fig. 4 zeigt einen Ausschnitt der in Fig. 5 gezeigten Strahlbildungskammer des erfindungsgemäßen magnetohydrodynamischen Generators.
Fig. 5 zeigt eine Verbindung von der in Fig. 3 gezeigten Strahlbildungskammer zur in Fig. 2 gezeigten Generatorkammer, wobei die hohle Stabkathode sich in einer Betriebsposition befindet.
Fig. 6 zeigt einen Wasserstofftank samt Kompressor, welche in Verbindung mit dem erfindungsgemäßen magnetohydrodynamischen Generator eingesetzt werden können.
Fig. 7 zeigt eine Stromversorgungseinheit für eine Anlage, in welcher der erfindungsgemäße magnetohydrodynamische Generator eingesetzt werden kann.

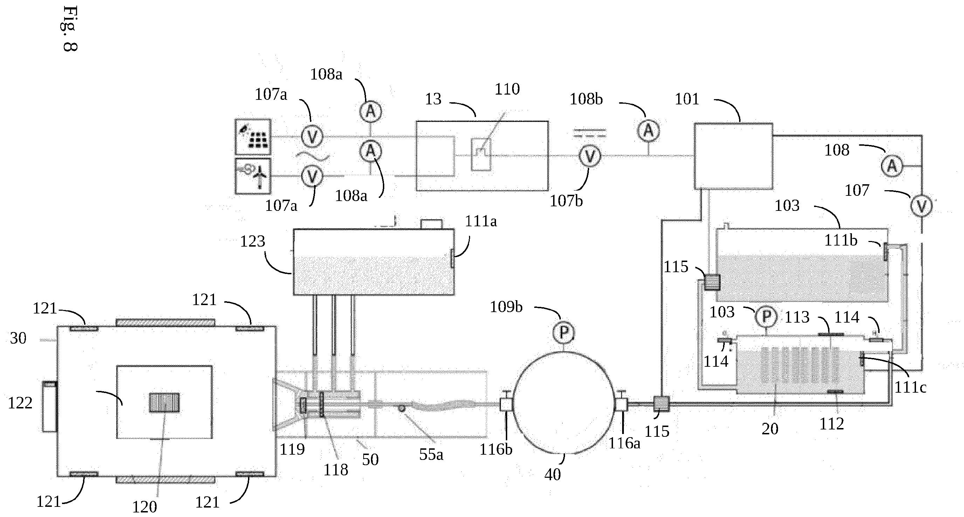

Fig. 8 zeigt eine Anlage zur Bereitstellung elektrischer Energie sowie von Wärme sowie zur Steuerung und Überwachung der Anlage dienende Sensoren.

### Detaillierte Beschreibung

Im Folgenden wird anhand der Zeichnungen eine Ausführungsform der Erfindung beschrieben.

Die vorliegende Erfindung betrifft einen erfindungsgemäßen magnetohydrodynamischen Generator zur Bereitstellung von elektrischer Energie sowie von Wärme.

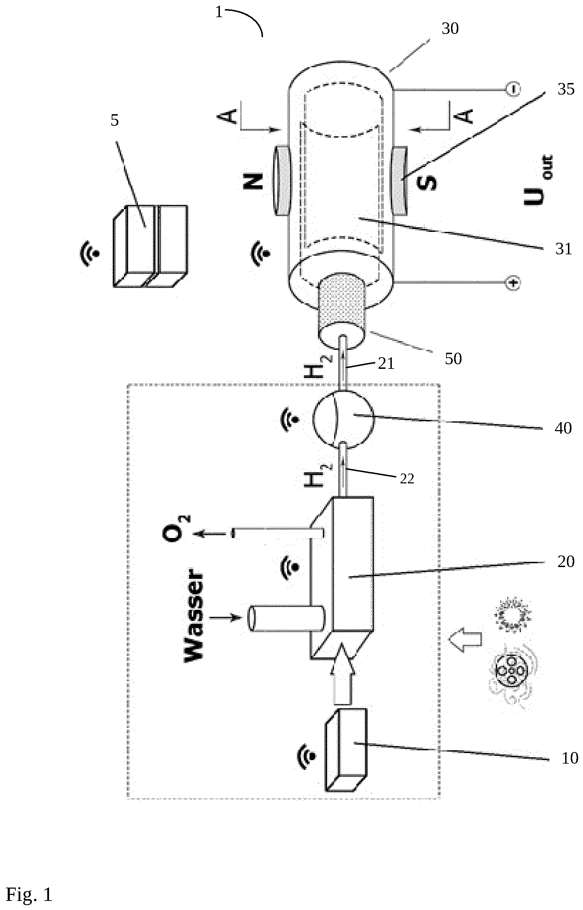

Der erfindungsgemäße magnetohydrodynamische Generator kann in einer Anlage 1 eingesetzt werden, welche, wie in Fig. 1 gezeigt, eine Steuereinheit 5, eine Energieversorgungseinheit 10, einen Elektrolyseur 20, einen Wasserstoffspeicher 40, eine Strahlbildungskammer 50 und einen magnetohydrodynamischen Generator 30 umfasst.

Die Energieversorgungseinheit 10 stellt elektrischen Strom aus einer regenerativen Energiequelle, wie z.B. Sonnenenergie, Windenergie, Wasserkraft, Bioenergie oder Geothermie, bereit. Mit diesem elektrischen Strom wird die Anlage 1 betrieben.

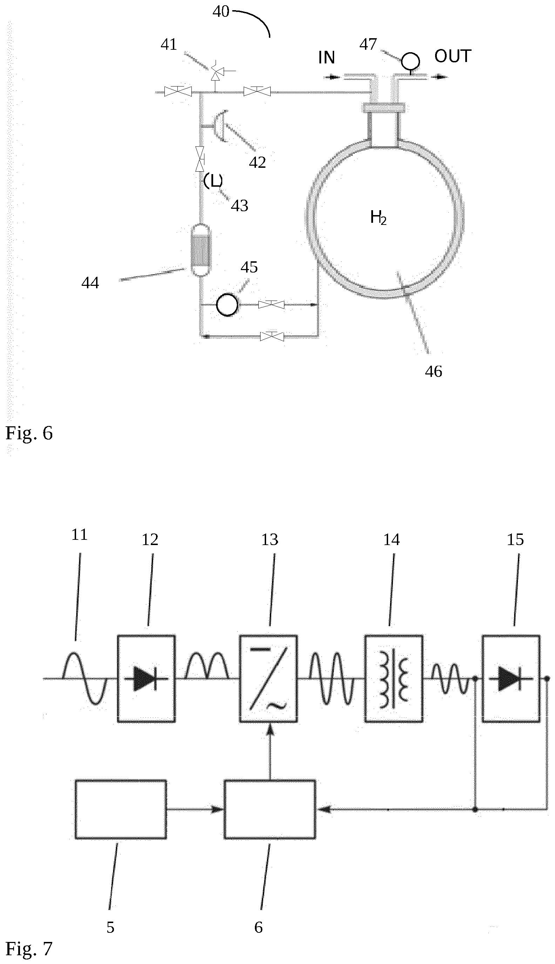

Die Energieversorgungseinheit 10 wird, wie in Fig. 7 gezeigt, mit einem elektrischen Wechselstrom 11 aus der regenerativen Energiequelle, z.B. Sonnenstrahlung, Wind, Wasser- und/oder Gezeitenkraft, Geothermie, Bioenergie, usw., gespeist. Die Energieversorgungseinheit 10 umfasst weiter einen ersten Gleichrichter 12, einen Wechselrichter 13, einen Transformator 14 sowie einen zweiten Gleichrichter 15. Der erste Gleichrichter 12, der Wechselrichter 13, der Transformator 14 sowie der zweite Gleichrichter 15 sind elektrisch, in der genannten Reihenfolge, in Reihe geschaltet.

Weiterhin sendet die Steuereinheit 5 Signale bzw. Daten an eine Rückkopplungseinheit 6. Die Rückkopplungseinheit 6 ist in einer Rückkopplungsschleife mit dem Wechselrichter 13, dem Transformator 14, dem Gleichrichter 15, die in Reihe geschaltet sind, gekoppelt. Die Rückkopplungseinheit kann einen Prozessor umfassen, welcher in der Form von Sensordaten empfangene Parameter verarbeitet. Die Sensordaten werden von in der Anlage 1 angeordneten Sensoren (im Folgenden beschrieben) übermittelt. Das Ergebnis der Verarbeitung der Sensordaten kann durch die Steuereinheit 5 zur Steuerung der Anlage 1 verwendet werden. Die Steuereinheit 5 und die Rückkopplungseinheit 6 können eine Einheit zum Steuern bzw. Regeln der Anlage 1 bilden.

Der Elektrolyseur 20 weist einen Sauerstoffanschluss, durch welchen gasförmiger Sauerstoff aus dem Elektrolyseur 20 entweichen kann, und einen Wasserstoffanschluss auf, durch welchen gasförmiger Wasserstoff aus dem Elektrolyseur 20 entweichen kann.

An den Wasserstoffanschluss wird eine Wasserstoffleitung 21 zum Auffangen des gebildeten Wasserstoffs angeschlossen, welche den aufgefangenen Wasserstoff zum Wasserstoffspeicher 40 führt.

An den Sauerstoffanschluss kann eine Sauerstoffleitung (nicht gezeigt(zum Auffangen und Sammeln des gebildeten Sauerstoffs angeschlossen werden. Der aufgefangene und gesammelte Sauerstoff lässt sich beispielsweise in Kläranlagen verwenden oder als technisches Gas stofflich nutzen.

Der Wasserstoffspeicher 40 ist in Fig. 6 gezeigt. Der Wasserstoffspeicher 40 umfasst Sicherheitsventil 41, eine Platzmembran 42, eine Niveauanzeige 43, einen Wärmetauscher 44, eine Pumpe 45, einen Wasserstofftank 46 sowie eine Druckanzeige (Manometer).

Der Wasserstoffspeicher 40 kann den mittels der regenerativen Energiequelle im Elektrolyseur erzeugten Wasserstoff im Wasserstofftank 46speichern und bietet somit einen Zwischenspeicher für Energie.

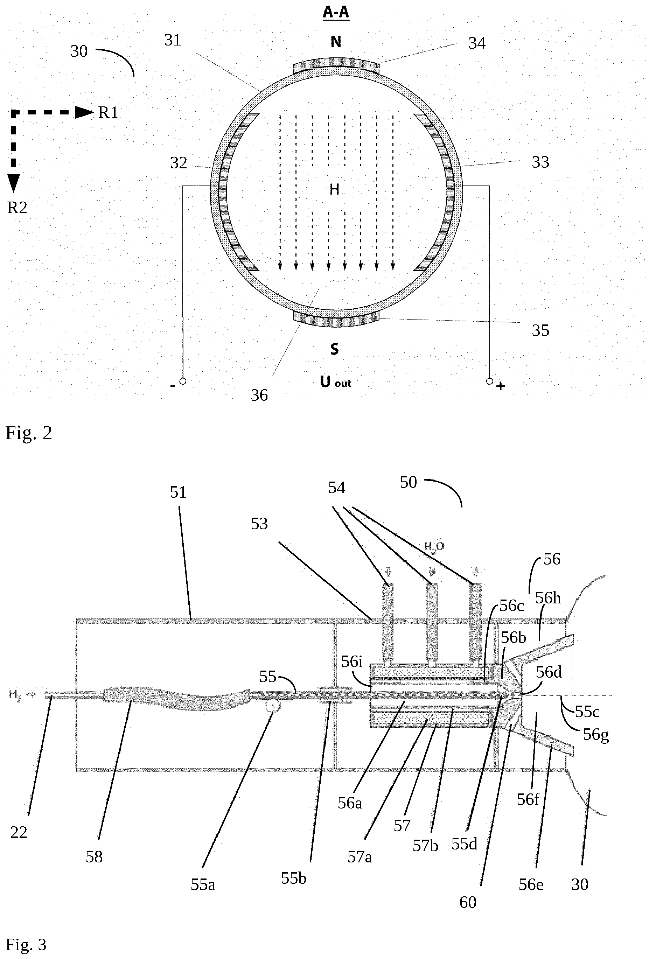

Der im Wasserstoffspeicher 40 zwischengespeicherte Wasserstoff kann durch die Wasserstoffleitung 22 in die Strahlbildungskammer 50 geleitet werden (s. Fig. 3). Die Strahlbildungskammer umfasst eine Kathodenanordnung, welche eine Kathode 55 und eine Anode 56 umfasst. Die Kathode 55 ist in dieser Ausführungsform eine hohle Stabkathode 55.

Die Wasserstoffleitung 22 ist mit einem Wasserstoffschlauch 58 fluidmäßig verbunden. Der Wasserstoffschlauch 58 kann als ein Hochdruckschlauch ausgeformt sein. Der Wasserstoffschlauch 58 ist mit der hohlen Stabkathode 55 fluidmäßig verbunden. Die hohle Stabkathode 55 wird durch eine Stabkathodenhalterung 55b gehalten und ist im Wesentlichen in einer horizontalen Richtung entlang einer Stabkathodenlängsachse 55c der hohlen Stabkathode 55 beweglich angeordnet. Ein Stabkathodenantrieb 55a treibt die hohle Stabkathode 55 an. Der Stabkathodenantrieb 55a umfasst beispielsweise ein Zahnrad, welches mit einer an der hohlen Stabkathode 55 befestigten Zahnung eingreift, um die hohle Stabkathode 55 anzutreiben. Die hohle Stabkathode ist aus einem elektrisch leitenden Material hergestellt. Die hohle Stabkathode ist zumindest teilweise aus Wolfram hergestellt.

Die hohle Stabkathode 55 ist in einem Anodeninnenraum 56a der Anode 56 beweglich angeordnet. Die Stabkathodenlängsachse 55c kann koaxial mit einer Anodenlängsachse 56g der Anode 56 angeordnet sein.

Der Wasserstoff aus dem Wasserstoffspeicher 40 kann durch die hohle Stabkathode 55 in den Anodeninnenraum 56a strömen.

Die Anode 56 weist eine einen rohr- oder topfförmigen Abschnitt 56c auf, welcher den Anodeninnenraum 56a ausbildet. Der rohr- oder topfförmige Abschnitt 56c sowie der Anodeninnenraum 56a sind wasserstofftankseitig abgeschlossen. Die hohle Stabkathode 55 durchstößt beispielsweise eine wasserstofftankseitig am rohr- oder topfförmigen Abschnitt 56c angebrachte Wand 56i.

Der Anodeninnenraum 56a umfasst einen Durchtrittsabschnitt 56b der Anode 56. Der Durchtrittsabschnitt 56b ist angrenzend an den rohr- oder topfförmigen Abschnitt 56c der Anode 56 angeordnet. Der Durchtrittsabschnitt 56b umfasst eine Durchtrittsöffnung 56d und verjüngt sich hin zur Durchtrittsöffnung 56d. Der Durchtrittsabschnitt 56b kann einen Düsenabschnitt 56b1 umfassen, welcher sich in der Richtung der Anodenlängsachse 56g der Anode 56 hin zur Durchtrittsöffnung 56d verjüngt. Der Düsenabschnitt 56b1 kann düsenförmig geformt sein. Der Düsenabschnitt 56b1 und die Durchtrittöffnung 56d können eine Düse ausformen. Die Durchtrittsöffnung 56d kann koaxial oder parallel zur Anodenlängsachse 56g angeordnet sein.

Die Strahlbildungskammer 50 umfasst weiter einen Wasserspeicherabschnitt 57 zum Speichern von Wasser. Der Wasserspeicherabschnitt 57 kann direkt an den rohr- oder topfförmigen Abschnitt 56c der Anode, welcher den Anodeninnenraum56a ausbildet bzw. beherbergt angeordnet sein. Der Wasserspeicherabschnitt 57 kann den rohr- oder topfförmigen Abschnitt 56c der Anode 56 umgebend angeordnet sein.

Der Wasserspeicherabschnitt 57 umfasst zumindest eine Wassereintrittsöffnung 57b, durch welche im Wasserspeicherabschnitt 57 gespeichertes Wasser in den Anodeninnenraum 56a eintreten bzw. eindringen bzw. gelangen kann. Insbesondere kann bei Wärme bzw. Hitze im Anodeninnenraum Wasser, welches im Wasserspeicherabschnitt 57 gespeichert ist, durch die zumindest eine Wassereintrittsöffnung 57b verdunsten bzw. verdampfen.

Der Wasserspeicherabschnitt 57 beherbergt ferner ein Wasserspeichermaterial 57a, welches geeignet ist, Wasser aufzunehmen, zu speichern und abzugeben. Im Wasserspeichermaterial 57b gespeichertes Wasser kann bei Wärme mittels Verdunsten bzw. Verdampfen und/oder Tröpfeln durch die Wassereintrittsöffnung 57b in den Anodeninnenraum 56a gelangen. Das Wasserspeichermaterial 57b kann ein Aramid umfassen. Das Wasserspeichermaterial kann Nomex des Herstellers DuPont umfassen.

Wenn die hohle Stabkathode 55 im Anodeninnenraum 56a der Anode 56 angeordnet ist, liegt zwischen der hohlen Stabkathode 55 und der Anode 56 im Anodeninnenraum 56a ein Elektrodenzwischenraum vor. Zwischen der hohlen Stabkathode 55 und der Anode 56 bzw. im Elektrodenzwischenraum kann eine elektrische Spannung angelegt werden, um einen Lichtbogen im Elektrodenzwischenraum zu erzeugen.

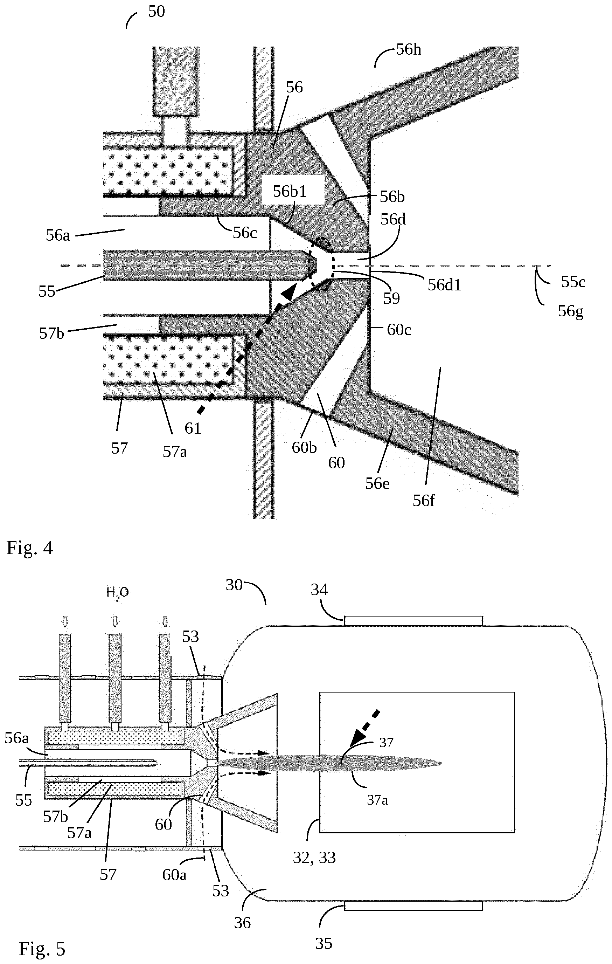

Für die Zündung des Lichtbogens wird die hohle Stabkathode 55 mittels des Stabkathodenantriebs 55a bezüglich der Anode 55 in eine Zündungsposition 61 gebracht. Ein Beispiel der Zündungsposition 61 der hohlen Stabkathode 55 ist in Fig. 3 und 4 gezeigt. In der Zündungsposition 61 beträgt der Abstand zwischen der hohlen Stabkathode 55 und der Anode 56 etwa 1mm oder weniger als 1mm. Durch Anlegen ausreichend hohen elektrischen Spannung zwischen der hohlen Stabkathode 55 und der Anode 56 entsteht der Lichtbogen im Elektrodenzwischenraum. Die angelegte elektrische Spannung kann in einem Bereich von bis zu 100V liegen und insbesondere weniger als 50V betragen. Ein Wert der angelegten Spannung ist beispielweise 36V, bei welcher bei einem der Abstand zwischen der hohlen Stabkathode 55 und der Anode 56 von ungefähr 1mm oder weniger als 1mm ein Lichtbogen zwischen der hohlen Stabkathode 55 und der Anode 56 entsteht. Bei Zündung entsteht der Lichtbogen ungefähr in dem in Fig. 4 mit einer gepunkteten Ellipse angedeuteten Lichtbogenbereich 59.

Nach der Zündung des Lichtbogens wird die hohle Stabkathode 55 mittels des Stabkathodenantriebs 55a bezüglich der Anode 55 in eine Betriebsposition gebracht. Ein Beispiel der Betriebsposition der hohlen Stabkathode 55 ist in Fig. 5 gezeigt. In der Betriebsposition kann der Abstand zwischen der hohlen Stabkathode 55 und Anode 56 mehr als 1cm betragen.

Nach Zündung des Lichtbogens befinden sich im Elektrodenzwischenraum Wasser, Wasserstoff und/oder Luft. Der Lichtbogen erhitzt die sich im Elektrodenzwischenraum befindlichen Stoffe, wodurch ein erhitztes Gasgemisch entsteht. Der Lichtbogen ionisiert zumindest teilweise das erhitzte Gasgemisch. Das erhitzte und zumindest teilweise ionisierte Gasgemisch kann beispielsweise eine Mischung folgender Teilchen umfassen: H₂O, H₂, H₂⁺, H₂⁻, O₂, O₂⁺, O₂⁻, OH, OH⁺, OH⁻, H, H⁺, H⁻, O, O⁺, O⁻, H, H⁺, H⁻. Das erhitzte und zumindest teilweise ionisierte Gasgemisch kann auch mehrfach ionisierte Teilchen umfassen. Das erhitzte und zumindest teilweise ionisierte Gasgemisch kann zumindest teilweise ein Plasma umfassen.

Der Erhitzung des Gasgemischs führt zu einem Überdruck im Elektrodenzwischenraum bzw. dem Anodeninnenraum 56a. Der erzeugte Überdruck führt dazu, dass das Gasgemisch durch die Durchtrittsöffnung 56d aus dem Anodeninnenraum bzw. dem Elektrodenzwischenraum in Form eines Gasgemischstrahls 37 entweicht (s. Fig. 5). Der Gasgemischstrahl 37 kann im Wesentlichen koaxial oder parallel zur Anodenlängsachse 56g angeordnet sein. Der Gasgemischstrahl 37 kann im Wesentlichen koaxial oder parallel zur Anodenlängsachse 56g strömen. Der erzeugte Überdruck hängt zumindest von der Menge von im Anodeninnenraum befindlichem Wasser sowie von der Menge an im Anodeninnenraum befindlichem Wasserstoff ab. Diese Abhängigkeit kann zumindest teilweise eine Proportionalität sein.

Der Gasgemischstrahl entweicht aus dem Anodeninnenraum 56a in einen Austrittsraum 56f. Der Austrittsraum 56f wird durch einen Austrittsabschnitt 56h gefasst bzw. der Austrittsraum 56f befindet sich innerhalb des Austrittsabschnitts 56h.U Der Austrittsabschnitt 56h ist hin zum magnetohydrodynamischen Generator 30 offen. Der Austrittsabschnitt 56h umfasst einen Rand 56e, welcher umlaufend an einem generatorseitigen Ende des Durchtrittsabschnitts 56b der Anode 56 (d.h. das hin zum magnetohydrodynamischen Generator 30 gewandte Ende des Durchtrittsabschnitts 56b) angeordnet ist. Der umlaufende Rand 56e kann bezüglich der Anodenlängsachse 56g diffusorförmig angeordnet sein, d.h. der durch den umlaufenden Rand 56e eingeschlossene Austrittsraum 56f kann sich in der Richtung der Anodenlängsachse 56g aufweiten. Der Rand 56e verläuft in einem Längsschnitt in der Richtung der Anodenlängsachse 56g geradlinig (s. Fig. 3 bis 5). In weiteren Ausführungsformen kann der Rand in einem Längsschnitt in der Richtung der Anodenlängsachse 56g gekrümmt verlaufen. Der Austrittsraum 56f kann, entsprechend dem Verlauf des Rands 56e im Längsschnitt in der Richtung der Anodenlängsachse 56g, kegelstumpfförmig, trichterförmig oder ausgestaltet sein. Der sich aufweitende Austrittsraum 56f kann bei einem durch die Durchtrittsöffnung 56d des Durchtrittsabschnitts 56d strömenden Gasgemischstrahl in einem Unterdruck in der Umgebung der Durchtrittsöffnung 56d resultieren.

Der Austrittsraum 56f der Anode 56 geht unmittelbar über in eine Generatorkammer 36 des magnetohydrodynamischen Generators 30. Die Generatorkammer 36 umfasst ein Generatorgehäuse 31. Das Generatorgehäuse 31 ist aus einem dielektrischen Material, beispielsweise aus Plexiglas, hergestellt. Das Generatorgehäuse 31 ist rohrförmig und hat einen kreisförmigen Querschnitt.

An einem zur Strahlbildungskammer 50 gewandten Ende ist das Generatorgehäuse 31 mit der Anode 56 verbunden. An einem von der Strahlbildungskammer 50 abgewandten Ende ist das Generatorgehäuse 31 verschlossen. Die Generatorkammer 36 ist bis auf die Durchtrittsöffnung 56d der Anode 56 sowie mindestens einen Lufteinlasskanal 60 (im Folgenden beschrieben) fluidmäßig abgeschlossen. In einer weiteren Ausführungsform kann die Generatorkammer 36 auch eine Öffnung umfassen.

An einer Innenseite Generatorgehäuses 31 sind entlang des Generatorgehäuses 31 Ladungsplatten bzw. elektrische Ladungsplatten 32, 33 angeordnet, welche entlang einer ersten Richtung R1 (s. Fig. 2) einander gegenüberstehen. Die erste Richtung R1 kann im Wesentlichen horizontal sein.

Die einander gegenüberstehenden Ladungsplatten 32, 33 sind jeweils mit elektrischen Leitungen (nicht gezeigt) elektrisch verbunden, welche beispielsweise zu einem Stromverbraucher (nicht gezeigt) oder einer Batterie zum Speichern der elektrischen Energie (nicht gezeigt) führen. Die Ladungsplatten 32, 33 sind aus einem nicht-magnetischen Material, wie z.B. Kupfer, Aluminium, Edelstahl oder einer Zinn-Nickel-Legierung, hergestellt.

An einer Außenseite des Generatorgehäuses 31 sind entlang des Generatorgehäuses 31 Magnete 34, 35 mit entgegengesetzten Magnetpolen (Nordpol 34 und Südpol 35) angeordnet, welche entlang einer zweiten Richtung R2 (s. Fig. 2) einander gegenüberstehen. Die erste Richtung R1 und die zweite Richtung R2 können im Wesentlichen rechtwinklig bzw. senkrecht zueinander angeordnet sein. Die zweite Richtung R2 kann im Wesentlichen vertikal sein.

In der in Fig. 1 und 2 gezeigten Ausführungsform ist der Nordpol 34 entlang der vertikalen Richtung R2 oberhalb des Südpols 35 angeordnet. In einer weiteren Ausführungsform können die Positionen des Nordpols 34 und des Südpols 35 umgekehrt sein, d.h. der Südpol 35 kann entlang der vertikalen Richtung R2 in Fig. 2 oberhalb des Nordpols 34 angeordnet sein.

Der in das Generatorgehäuse 31 des magnetohydrodynamischen Generators 30 eintretende Gasgemischstrahl 37, welcher Elektronen, Ionen, Atome und Moleküle umfasst, unterliegt beim Durchtreten des zwischen den Magneten 34, 35 ausgebildeten Magnetfelds der Lorentzkraft, aufgrund welcher die Elektronen und die elektrisch geladenen Ionen gemäß dem Vorzeichen der elektrischen Ladung in entgegengesetzte Richtungen abgelenkt werden, wobei die Lorentzkraft parallel oder antiparallel zur ersten Richtung R1 ist, entlang welcher die Ladungsplatten 32, 33 einander gegenüberstehen. Die Elektronen sowie die positiv und negativ elektrisch geladenen Ionen des Gasgemischs werden gemäß dem Vorzeichen der elektrischen Ladung, d.h. je nach positiver oder negativer elektrischer Ladung des betreffend Ions, in Richtung jeweils einer der Ladungsplatten 32, 33 abgelenkt und dort eingefangen. Die Ladungstrennung erzeugt eine elektrische Spannung, welche für den Stromverbraucher (nicht gezeigt) nutzbar ist und/oder zum elektrischen Aufladen der Batterie (nicht gezeigt) verwendet werden kann.

Die Anode 56 umfasst ferner mindestens einen Lufteinlasskanal 60 zum Bereitstellen eines Luftstroms 60a in den Austrittsraum 56f der Anode 56 sowie in die Generatorkammer 36. Der Lufteinlasskanal 60 stellt einen Zugang für Luft aus der Umgebung der Strahlbildungskammer 50 sowie der Generatorkammer 36 in Austrittsraum 56f der Anode 56 und in die Generatorkammer 36 bereit.

In der dargestellten Ausführungsform ist der mindestens eine Lufteinlasskanal 60 im Durchtrittsabschnitt 56b angeordnet und weist eine geradlinigen Verlauf auf (s. Fig. 3 bis 5). Der mindestens eine Lufteinlasskanal 60 umfasst eine äußere Öffnung 60b und eine innere Öffnung 60c. Die äußere Öffnung 60b ist an einer Seite des Durchtrittsabschnitts 56b, welche der Umgebung der Strahlbildungskammer 50 zugewandt ist, angeordnet. Die innere Öffnung 60c ist an einer Seite des Durchtrittsabschnitts 56b angeordnet, welche dem Austrittsraum 56f zugewandt ist. Der mindestens eine Lufteinlasskanal 60 mündet sowohl in die Umgebung der Strahlbildungskammer 50 als auch in den Austrittsraum 56f der Anode 56. Luft aus der Umgebung der Strahlbildungskammer 50 kann in den Austrittsraum 56f strömen.

Insbesondere kann die innere Öffnung 60c des mindestens einen Lufteinlasskanals 60 in der Nähe des in den Austrittsraum 56f mündenden Ausgangs 56d1 der Durchtrittsöffnung 56d angeordnet sein. Die in den Austrittsraum 56f gelangende Luft

In einer weiteren Ausführungsform kann der mindestens eine Lufteinlasskanal 60 zumindest teilweise im Austrittsabschnitt 56h angeordnet sein. In einer weiteren Ausführungsform kann der mindestens eine Lufteinlasskanal 60 einen gekrümmten Verlauf aufweisen.

Luft aus der Umgebung der Strahlbildungskammer 50 wird in den Austrittsraum 56f gesaugt. Die angesaugte Luft strömt in mindestens einem Luftstrom 60a durch den mindestens einen Lufteinlasskanal 60 in den Austrittsraum 56f der Anode 56. Der mindestens eine Lufteinlasskanal 60 ist derart angeordnet, dass der mindestens eine Luftstrom 60a zumindest teilweise seitlich entlang des Gasgemischstrahls 37 strömt.

Der Gasgemischstrahl 37 weist ein Temperaturgefälle auf. Im Inneren des Gasgemischstrahls 37 ist die Temperatur des Gasgemischstrahls 37 höher, während in Randbereichen 37a des Gasgemischstrahls 37 die Temperatur des Gasgemischstrahls 37 niedriger ist. Die niedrigere Temperatur in den Randbereichen 37a des Gasgemischstrahls 37 ermöglicht eine exotherme Kettenreaktion bzw. Knallgasreaktion von im Gasgemisch vorhandenen Teilchen mit im Luftstrom 60a vorhandenen Sauerstoff. Teilchen des Gasgemischs, wie z.B. Hydroxyl-Radikale HO bzw. OH oder Wasserstoffatome H, sind an Teilreaktionen der Knallgasreaktion beteiligt. Die Knallgasreaktion ist exotherm, d.h. läuft unter Abgabe von Wärme ab.

Wie oben erwähnt, trifft der Luftstrom 60a an den Randbereichen 37a des Gasgemischstrahls 37 auf den Gasgemischstrahl 37. Die Knallgasreaktion läuft an den Randbereichen 37a des Gasgemischstrahls 37 ab. Der Gasgemischstrahl 37 wird durch die an den Randbereichen 37a ablaufende Knallgasreaktion an den Randbereichen 37a erwärmt. Die Erwärmung des Gasgemischstrahls 37 an den Randbereichen 37a führt zu einer verringerten Abkühlung im Inneren des Gasgemischstrahls 37 bzw. zu einer Aufrechterhaltung der thermischen Energie im Inneren des Gasgemischstrahls 37.

Die thermische Energie im Inneren des Gasgemischstrahls 37 ermöglicht die Ionisierung des Gasgemischs im Gasgemischstrahl 37. Die ionisierten Teilchen des Gasgemischstrahls 37 werden durch das Magnetfeld der Magnete 34, 35 getrennt und auf den Ladungsplatten 32, 33 eingefangen.

Wie oben erwähnt, ist der erfindungsgemäße magnetohydrodynamische Generator 30 in einer Anlage 1 zur Bereitstellung von Energie und Wärme einsetzbar. Die Anlage 1 wird erfindungsgemäß wie folgt gesteuert bzw. geregelt.

Die Anlage 1 kann 5 Betriebszustände aufweisen, die wie folgt bezeichnet werden können: "PENDING" bzw. "STANDBY", "READY" bzw. "BEREIT", "WORKING" bzw. "IN BETRIEB", "WARNING" bzw. "WARNUNG" sowie "ALARM".

Anfänglich wird ein Wechselstrom 11 vom einer oder mehreren der regenerativen Energiequelle (nicht gezeigt), wie z.B. einem Windkraft, Solarenergie, Geothermie, Bioenergie, und/oder vom Stromnetz der Anlage 1 zugeführt. Mindestens ein Voltmeter 107 und mindestens ein Amperemeter 108, welche mit dem Wechselrichter 13 verbunden sind, erfassen den Wechselstrom 11. Der Wechselrichter 13 sendet Sensordaten des mindestens einen Voltmeters 107 und des mindesten eines Amperemeters 108 über einen Schalter 101 mittels WiFi an einen Server (nicht gezeigt) und schaltet die Anlage 1 in den Zustand "PENDING". Weiter gleicht der Wechselrichter 13 den Wechselstrom 11 und dessen Wechselspannung aus, summiert und korrigiert sie. Wenn ein Benutzer die Anlage 1 einschaltet, wird ein Steuersignal vom Server an den Wechselrichter 13 gesendet. Der Wechselrichter 13 aktiviert ein Steuerrelais 110, welcher die Anlage 1 einschaltet. An einem Ausgang des Wechselrichters 13 ergeben sich ein konstanter Strom und eine konstante Spannung.

Der von einem Voltmeter und einem Amperemeter erfasste Strom gelangt vom Wechselrichter 13 zum Schalter 101, der einen Flüssigkeitsstandsensor 111a in einem Wassertank 123 und einen Flüssigkeitsstandsensor 111b in einem Elektrolytbehälter 103 speist. Die Flüssigkeitsstandsensoren 111a, 11b überprüfen, ob der Wassertank 123 und der Elektrolytbehälter 103 jeweils mit Wasser bzw. Elektrolyt gefüllt sind. Wird im Wassertank 123 oder dem Elektrolytbehälter 103 ein Fehlen einer ausreichenden Wassermenge bzw. einer ausreichenden Menge an Elektrolytflüssigkeit ermittelt, senden der Flüssigkeitsstandsensoren 111a bzw. 111b eine Nachricht an den Server. Es kann am Wassertank 123 und/oder am Elektrolytbehälter 103 jeweils eine gesteuerte Pumpe (nicht gezeigt) vorhanden sein, welche den Wassertank 123 und/oder den Elektrolytbehälter 103 Behälter mit Flüssigkeit füllen kann. Die gesteuerte Pumpe benachrichtigt den Server über den aktualisierten Stand der Flüssigkeiten im Wassertank 123 und/oder dem Elektrolytbehälter 103. Der Server wechselt daraufhin den Zustand der Anlage 1 auf "BEREIT".

Der Schalter 101 versorgt eine Elektrolytpumpe 115 mit elektrischer Leistung. Die Elektrolytpumpe 115 pumpt Elektrolytflüssigkeit durch den Elektrolyseur 20. Die Elektrolytmenge im Elektrolyseur 20 wird durch einen Füllstandsensor 111c erfasst. Wenn die Elektrolytmenge einen Sollwert erreicht, sendet der Füllstandsensor 111c eine Meldung an den Schalter 101, welcher den Elektrolyseur 20 einschaltet.

Während des Betriebs des Elektrolyseurs 20 können Druck und Temperatur im Elektrolyseur 20 ansteigen. Wenn der Druck höher als 2 bar ist, öffnet ein Sensorventil 109a, in welchen ein Drucksensor integriert ist, und senkt den Druck, indem im Elektrolyseur 20 angesammelter Sauerstoff freigesetzt wird. Alternative könnte der Sauerstoff als technisches Gas in einem Sauerstoffbehälter (nicht gezeigt) gesammelt werden. Wenn eine Temperatur des Elektrolyten 50 Grad Celsius überschreitet, sendet Elektrolyttemperatursensor 113 ein Signal an den Schalter 101, damit die Spannung der Pumpe 115 erhöht wird, um eine Zirkulation des Elektrolyten durch den Elektrolytbehälter 103 und den Elektrolyseur, welche mittels Elektrolytleitungen einen Elektrolytkreislauf bilden, zu erhöhen. Die erhöhte Zirkulation des Elektrolyten kühlt den Elektrolyten ab.

Im Elektrolyseur sind ferner ein Alkalisensor bzw. Elektrolytqualitätssensor 112 sowie zwei Gasanalysatoren 114 an den Gasausgängen für Sauerstoff und Wasserstoff angeordnet. Der Alkalisensor 112 sendet Sensordaten über Konzentrationen, z.B. eines Alkalis, im Elektrolyt an den Server. Die Gasanalysatoren 114 senden Sensordaten über den Gasausstoß an den Server. Dadurch kann der Server bzw. die Steuereinheit 5 die Alkalikonzentration im Elektrolyten vorhersagen, was eine effizientere Wasserstoffproduktion ermöglicht.

Wenn der Schalter 101 vom einem der zwei Gasanalysatoren 114 ein Signal empfängt, dass Wasserstoff in der Anlage 1 vorhanden ist, öffnet der Schalter 101 das Einlassventil 116a zum Wasserstoffspeicher 40 und versorgt die Pumpe 104a mit elektrischer Leistung, um den Wasserstoffspeicher 40 mit Wasserstoff zu füllen.

Mit zunehmendem Druck im Wasserstoffspeicher 40, der mit einem im Sensorventil 109b integrierten Drucksensor gemessen wird, wird eine Spannung von 36V in der Strahlbildungskammer 50 zwischen der hohlen Stabkathode 55 und der Anode 56 angelegt. Der Elektromotor 117 bewegt die hohle Stabkathode 55 in die Zündungsposition 61, so dass eine Entfernung von etwa 1mm oder weniger als 1mm zwischen der hohlen Stabkathode 55 und der Anode 56 vorliegt. Bei dieser Entfernung entsteht ein Lichtbogen im Elektrodenzwischenraum zwischen der hohlen Stabkathode 55 und der Anode 56.

Sobald ein Sensor 119 ein Auftreten des Lichtbogens und eine Spannung und/oder einen Strom in der Strahlbildungskammer 50 erfasst, sendet der Sensor 119 ein Signal an den Server 101, dass der Lichtbogen aufgetreten ist. Der Schalter 101 versorgt darauf den Stabkathodenantrieb 55a mit elektrischer Leistung, um die hohle Stabkathode 55 von der Anode 56 in eine Betriebsposition zu bringen. In der Betriebsposition kann ein Mindestabstand zwischen der hohlen Stabkathode 55 und der Anode 56 etwa 1,3cm betragen. Um den Lichtbogen in einem brennenden Zustand zu halten, ist eine verringerte elektrische Feldstärke von 20 V/cm erforderlich. Die verringerte Feldstärke stabilisiert den Lichtbogen und spart Strom beim Aufrechterhalten des Lichtbogens

Sobald der Temperatursensor 118 in der Strahlbildungskammer 50 eine Temperatur von 100 Grad Celsius erfasst, sendet der Temperatursensor ein Signal an den den Server, welcher den Zustand der Anlage 1 auf "IN ARBEIT" wechselt.

Unter dem Einfluss eines Gleichstrom-Lichtbogens, der im Elektrodenzwischenraum zwischen der hohlen Stabkathode 55 und der 56 aufrechterhalten wird, wird die Anode 56 auf eine Temperatur erwärmt, die ausreichend ist, das Wasser Wasserspeicherabschnitt 57 zu verdampfen, Der Wasserspeicherabschnitt 57 ist mit dem Wassertank 123 verbunden. Der sich bildende Wasserdampf kühlt die hohle Stabkathode 55 und die Anode 56 ab. Der Wasserdampf erwärmt sich dabei auf Trockendampftemperatur. Der Lichtbogen erwärmt den Dampf auf die Ionisationstemperatur und bildet ein Gasgemisch, welches zumindest teilweise ein Plasma umfasst.

Sobald die Anlage 1 sich im Zustand "IN ARBEIT" befindet, öffnet der Wasserstoffspeicher 40 ein Auslassventil 116b. Wasserstoff strömt in die Strahlbildungskammer 50.

Sobald Spannungs- und Stromsensoren 120 auf den Ladungsplatten 32, 33 Strom erfassen, ist die Anlage 1 bereit, eine große Bandbreite von auftretenden Lasten mit Strom zu versorgen. Je nach Höhe der auftretenden Last wird die Zufuhr von Wasserstoff aus dem Wasserstoffspeicher 40 geregelt.

Es sind ferner in der Generatorkammer 36 Temperaturfühler 121 und ein Abgasanalysator 122 bereitgestellt.

### Bezugszeichenliste

- 1: Anlage
- 5: Steuereinheit
- 6: Rückkopplungseinheit
- 10: Energieversorgungseinheit
- 11: Wechselstrom
- 12: Gleichrichter
- 13: Wechselrichter
- 14: Transformator
- 15: Gleichrichter
- 20: Elektrolyseur
- 21, 22: Wasserstoffleitung
- 30: Magnetohydrodynamischer Generator
- 31: Gehäuse
- 32, 33: Ladungsplatten
- 34, 35: Magnete
- 36: Generatorkammer
- 37: Gasgemischstrahl
- 37a: Randbereiche
- 40: Wasserstoffspeicher
- 41: Sicherheitsventil
- 42: Platzmembran
- 43: Niveauanzeige
- 44: Wärmetauscher
- 45: Pumpe
- 46: Wasserstofftank
- 47: Manometer
- 50: Strahlbildungskammer
- 51: Gehäuse
- 52: Wasserstoffleitung
- 53: Öffnungen, Perforierung
- 54: Wasserleitungen
- 55: Stabkathode
- 55a: Stabkathodenantrieb
- 55b: Stabkathodenhalterung
- 55c: Stabkathodenlängsachse
- 55d: Strahlbildungskammerseitiges Ende
- 56: Anode
- 56a: Anodeninnenraum
- 56b: Durchtrittsabschnitt
- 56c: Rohrförmiger Abschnitt
- 56d: Durchtrittsöffnung
- 56d1: Ausgang
- 56e: Rand
- 56f: Austrittsraum
- 56g: Anodenlängsachse
- 56h: Austrittsabschnitt
- 56i: Wand
- 57: Wasserspeicherabschnitt
- 57a: Wasserspeichermaterial
- 57b: Wassereintrittsöffnung
- 58: Wasserstoffschlauch
- 59: Lichtbogenbereich
- 60: Lufteinlasskanal
- 60a: Luftstrom
- 61: Zündungsposition
- 101: Schalter
- 103: Elektrolytbehälter
- 107: Voltmeter
- 108: Amperemeter
- 109a, 109b: Sensorventil
- 110: Steuerrelais
- 111a, 111b: Flüssigkeitsstandsensor
- 112: Elektrolytqualitätssensor
- 113: Elektrolyttemperatursensor
- 114: Gasanalysatoren
- 115: Pumpen
- 116a: Einlassventil
- 116b: Auslassventil
- 118: Temperatursensor
- 119: Sensor
- 120: Spannungs- und Stromsensor
- 121: Temperatursensoren
- 122: Abgasanalysator

## Patentansprüche

1. Magnetohydrodynamischer Generator (30), umfassend
- eine Strahlbildungskammer (50), aufweisend eine Elektrodenanordnung (55, 56), wobei die Elektrodenanordnung (55, 56) eine Anode (56), welche einen Anodeninnenraum (56a) aufweist, sowie eine Kathode (55) umfasst, welche im Anodeninnenraum (56a) beweglich angeordnet ist, wobei die Anode (56) ausgestaltet ist, um Wasser in den Anodeninnenraum (56a) zu leiten, und die Kathode (55) ausgestaltet ist, um Wasserstoff in den Anodeninnenraum (56a) zu leiten;
- eine Generatorkammer (36), welche elektrische Ladungsplatten (32, 33) sowie Magnetpole (34, 35) aufweist, wobei die elektrischen Ladungsplatten (32, 33) entlang einer ersten Richtung (R1) einander gegenüberstehen, die Magnetpole (34, 35) entlang einer zweiten Richtung (R2) einander gegenüberstehen, und die erste Richtung (R1) und die zweite Richtung (R2) im Wesentlichen rechtwinklig zueinander angeordnet sind;
wobei die Strahlbildungskammer (50) und die Generatorkammer (36) mittels einer Durchtrittsöffnung (56d) miteinander fluidmäßig verbunden sind.

2. Magnetohydrodynamischer Generator (30) nach Anspruch 1, wobei die Kathodenanordnung (55, 56) weiter einen Wasserspeicherabschnitt (57) zum Speichern von Wasser umfasst.

3. Magnetohydrodynamischer Generator (30) nach Anspruch 2, wobei der Wasserspeicherabschnitt (57) angrenzend an den Anodeninnenraum (56a) angeordnet ist.

4. Magnetohydrodynamischer Generator (30) nach Anspruch 3, wobei der Wasserspeicherabschnitt (57) eine oder mehrere Wassereintrittsöffnungen (57b) zum Leiten von Wasser in den Anodeninnenraum (56a) umfasst.

5. Magnetohydrodynamischer Generator (30) nach einem der vorhergehenden Ansprüche, wobei die Kathode (55) eine hohle Stabkathode (55) ist, welche sich entlang einer Stabkathodenlängsachse (55c) erstreckt und an Enden entlang der Stabkathodenlängsachse (55c) offen ist, wobei die hohle Stabkathode (55) zumindest entlang der Stabkathodenlängsachse (55c) beweglich angeordnet ist, und wobei zumindest ein strahlbildungskammerseitiges Ende (55d) der Enden entlang der Stabkathodenlängsachse im Anodeninnenraum (56a) angeordnet ist.

6. Magnetohydrodynamischer Generator (30) nach einem der vorhergehenden Ansprüche, wobei die Anode (56) ferner einen Austrittsabschnitt (56h) umfasst, welcher sich diffusorförmig aufweitet.

7. Magnetohydrodynamischer Generator (30) nach einem der vorhergehenden Ansprüche, wobei die Anode (56) ferner mindestens einen Lufteinlasskanal (60) umfasst, welcher ausgestaltet ist, um Luft aus der Umgebung in die Generatorkammer (36) zu leiten.

8. Magnetohydrodynamischer Generator (30) nach einem der vorhergehenden Ansprüche, wobei der mindestens eine Lufteinlasskanal (60) eine innere Öffnung (60c) umfasst, welche in der Generatorkammer (36) in der Nähe eines in die Generatorkammer (36) mündenden Ausgangs (56d1) der Durchtrittsöffnung (56d) angeordnet ist.

9. Anlage (1) zur Bereitstellung elektrischer Energie, umfassend einen magnetohydrodynamischen Generator (30) nach einem der Ansprüche 1 bis 5, einen Elektrolyseur (20) zur Bereitstellung von Wasserstoff, einen Wasserstofftank (46) zum Speichern des bereitgestellten Wasserstoffs und Leiten des Wasserstoffs zum magnetohydrodynamischen Generator (30)

10. Verfahren zum Bereitstellen elektrischer Leistung, umfassend
- Zünden eines Lichtbogens in einer Strahlbildungskammer (50);
- Erzeugen mittels des Lichtbogens eines zumindest teilweise ionisierten Gasgemischs ausgehend von zumindest Wasser und Wasserstoff;
- Erzeugen eines Gasgemischstrahls (37) aus dem Gasgemisch;
- Trennen von im Gasgemischstrahl (37) vorhandenen elektrisch positiv geladenen Ionen und elektrisch negativ geladenen Ionen;
- Einfangen der elektrisch positiv geladenen Ionen und der elektrisch negativ geladenen Ionen an zwei einander gegenüberstehenden elektrischen Ladungsplatten (32, 33).

11. Verfahren nach Anspruch 10, wobei das Erzeugen des zumindest teilweise ionisierten Gasgemischs ein Zuführen von Wasserstoff sowie ein Zuführen von Wasser sowie ein Mischen zumindest des Wasserstoffs und des Wassers umfasst.

12. Verfahren nach Anspruch 10 oder 11, wobei das Zünden eines Lichtbogens ein Zünden eines Lichtbogens in einer Zündungsposition (61) sowie ein Aufrechterhalten des Lichtbogens in einer Betriebsposition umfasst.

13. Verfahren nach einem der Ansprüche 10 bis 12, ferner umfassend ein Zuführen eines Umgebungsluft umfassenden Luftstroms (60a) an Randbereiche (37a) des Gasgemischstrahls (37).

## Geänderte Patentansprüche

### Geänderte Patentansprüche gemäss Regel 137(2) EPÜ.

1. Magnetohydrodynamischer Generator (30), umfassend
- eine Strahlbildungskammer (50), aufweisend eine Elektrodenanordnung (55, 56), wobei die Elektrodenanordnung (55, 56) eine Anode (56), welche einen Anodeninnenraum (56a) aufweist, sowie eine hohle Stabkathode (55) umfasst, welche im Anodeninnenraum (56a) beweglich angeordnet ist, um in eine Zündungsposition (61) zum Zünden eines Lichtbogens bewegt zu werden, wobei die Anode (56) ausgestaltet ist, um Wasser in den Anodeninnenraum (56a) zu leiten, und die hohle Stabkathode (55) ausgestaltet ist, um Wasserstoff in den Anodeninnenraum (56a) zu leiten;
- eine Generatorkammer (36), welche elektrische Ladungsplatten (32, 33) sowie Magnetpole (34, 35) aufweist, wobei die elektrischen Ladungsplatten (32, 33) entlang einer ersten Richtung (R1) einander gegenüberstehen, die Magnetpole (34, 35) entlang einer zweiten Richtung (R2) einander gegenüberstehen, und die erste Richtung (R1) und die zweite Richtung (R2) im Wesentlichen rechtwinklig zueinander angeordnet sind;
wobei die Strahlbildungskammer (50) und die Generatorkammer (36) mittels einer Durchtrittsöffnung (56d) miteinander fluidmäßig verbunden sind.

2. Magnetohydrodynamischer Generator (30) nach Anspruch 1, wobei die Kathodenanordnung (55, 56) weiter einen Wasserspeicherabschnitt (57) zum Speichern von Wasser umfasst.

3. Magnetohydrodynamischer Generator (30) nach Anspruch 2, wobei der Wasserspeicherabschnitt (57) angrenzend an den Anodeninnenraum (56a) angeordnet ist.

4. Magnetohydrodynamischer Generator (30) nach Anspruch 3, wobei der Wasserspeicherabschnitt (57) eine oder mehrere Wassereintrittsöffnungen (57b) zum Leiten von Wasser in den Anodeninnenraum (56a) umfasst.

5. Magnetohydrodynamischer Generator (30) nach einem der vorhergehenden Ansprüche, wobei die hohle Stabkathode (55) sich entlang einer Stabkathodenlängsachse (55c) erstreckt und an Enden entlang der Stabkathodenlängsachse (55c) offen ist, wobei die hohle Stabkathode (55) zumindest entlang der Stabkathodenlängsachse (55c) beweglich angeordnet ist, und wobei zumindest ein strahlbildungskammerseitiges Ende (55d) der Enden entlang der Stabkathodenlängsachse im Anodeninnenraum (56a) angeordnet ist.

6. Magnetohydrodynamischer Generator (30) nach einem der vorhergehenden Ansprüche, wobei die Anode (56) ferner einen Austrittsabschnitt (56h) umfasst, welcher sich diffusorförmig aufweitet.

7. Magnetohydrodynamischer Generator (30) nach einem der vorhergehenden Ansprüche, wobei die Anode (56) ferner mindestens einen Lufteinlasskanal (60) umfasst, welcher ausgestaltet ist, um Luft aus der Umgebung in die Generatorkammer (36) zu leiten.

8. Magnetohydrodynamischer Generator (30) nach einem der vorhergehenden Ansprüche, wobei der mindestens eine Lufteinlasskanal (60) eine innere Öffnung (60c) umfasst, welche in der Generatorkammer (36) in der Nähe eines in die Generatorkammer (36) mündenden Ausgangs (56d1) der Durchtrittsöffnung (56d) angeordnet ist.

9. Anlage (1) zur Bereitstellung elektrischer Energie, umfassend einen magnetohydrodynamischen Generator (30) nach einem der Ansprüche 1 bis 5, einen Elektrolyseur (20) zur Bereitstellung von Wasserstoff, einen Wasserstofftank (46) zum Speichern des bereitgestellten Wasserstoffs und Leiten des Wasserstoffs zum magnetohydrodynamischen Generator (30)

10. Verfahren zum Bereitstellen elektrischer Leistung, umfassend
- Bewegen einer hohlen Stabkathode (55) einer Strahlbildungskammer (50) in eine Zündungsposition (61), wobei die Strahlbildungskammer (50) eine Elektrodenanordnung (55, 56) aufweist, welche eine einen Anodeninnenraum (56a) aufweisende Anode (56) sowie die hohle Stabkathode (55) umfasst, welche im Anodeninnenraum (56a) beweglich angeordnet ist;
- Zünden eines Lichtbogens zwischen der hohlen Stabkathode (55) und der Anode (56);
- Erzeugen mittels des Lichtbogens eines zumindest teilweise ionisierten Gasgemischs ausgehend von zumindest Wasser und Wasserstoff;
- Erzeugen eines Gasgemischstrahls (37) aus dem Gasgemisch;
- Trennen von im Gasgemischstrahl (37) vorhandenen elektrisch positiv geladenen Ionen und elektrisch negativ geladenen Ionen;
- Einfangen der elektrisch positiv geladenen Ionen und der elektrisch negativ geladenen Ionen an zwei einander gegenüberstehenden elektrischen Ladungsplatten (32, 33).

11. Verfahren nach Anspruch 10, wobei das Erzeugen des zumindest teilweise ionisierten Gasgemischs ein Zuführen von Wasserstoff sowie ein Zuführen von Wasser sowie ein Mischen zumindest des Wasserstoffs und des Wassers umfasst.

12. Verfahren nach Anspruch 10 oder 11, wobei das Zünden eines Lichtbogens ein Aufrechterhalten des Lichtbogens in einer Betriebsposition umfasst.

13. Verfahren nach einem der Ansprüche 10 bis 12, ferner umfassend ein Zuführen eines Umgebungsluft umfassenden Luftstroms (60a) an Randbereiche (37a) des Gasgemischstrahls (37).
